(19) Europäisches Patentamt
European Patent Office
Office européen des brevets

(11) Veröffentlichungsnummer : **0 359 795 B1**

(12) # EUROPÄISCHE PATENTSCHRIFT

(45) Veröffentlichungstag der Patentschrift : **15.04.92 Patentblatt 92/16**

(51) Int. Cl.$^5$ : **C09K 9/02,** G02F 1/35

(21) Anmeldenummer : **89902943.3**

(22) Anmeldetag : **04.03.89**

(86) Internationale Anmeldenummer : **PCT/EP89/00224**

(87) Internationale Veröffentlichungsnummer : **WO 89/08686 21.09.89 Gazette 89/23**

(54) **ZWITTERIONISCHE NLO-CHROMOPHORE.**

(30) Priorität : **12.03.88 DE 3808309**

(43) Veröffentlichungstag der Anmeldung : **28.03.90 Patentblatt 90/13**

(45) Bekanntmachung des Hinweises auf die Patenterteilung : **15.04.92 Patentblatt 92/16**

(84) Benannte Vertragsstaaten : **BE CH DE FR GB IT LI NL SE**

(56) Entgegenhaltungen :
**EP-A- 0 091 838**
**US-A- 4 659 177**

(56) Entgegenhaltungen :
**Chemical Abstracts, Volume 85, 1976 (Columbus, Ohio, US) J. Kirchnerova et al.:"Dielectric increments and the conformations of amino acids and betaines in water", see page 497, abstract Nr. 108971m, 6 J. Phys. Chem. 1976 80(18), 1974-80**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **DORSCH, Dieter**
**Reuterallee 24**
**W-6100 Darmstadt (DE)**
Erfinder : **RIEGER, Bernhard**
**Hauptstra e 31a**
**W-6115 Münster-Altheim (DE)**

EP 0 359 795 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft nichtlinear optische Materialien, enthaltend ein nichtlinear optisches Chromophor mit zwitterionischer Struktur und mit einem Elektronendonor-/-akzeptorsystem, sowie Polymere, die die Chromophore kovalent gebunden enthalten, und deren Verwendung in optischen Bauelementen.

Materialien, die nichtlinear optisches Verhalten zeigen, sind durch eine feldstärkeabhängige dielektrische Suszeptibilität gekennzeichnet. Diese Nichtlinearität der dielektrischen Suszeptibilität hat eine Reihe von Effekten zur Folge, die von großem anwendungstechnischen Interesse sind.

Die Frequenzverdopplung (second harmonic generation, SHG) ist die Erzeugung von Licht, das verglichen mit dem eingestrahlten Licht die halbe Wellenlänge aufweist. Als elektrooptischer Effekt (Pockels-Effekt) wird die Änderung des Brechungsindex eines Materials mit einem angelegten elektrischen Feld bezeichnet; Methoden der Summen-und Differenzfrequenzmischung sowie der Frequenzteilung gestatten die kontinuierliche Abstimmung von Laserlicht.

Nichtlinear optische Materialien eignen sich zur Herstellung von optischen Bauelementen. Dazu gehören beispielsweise elektrooptische Modulatoren, elektrooptische Schalter, elektrooptische Richtkoppler und Frequenzverdoppler.

Diese Bauelemente finden Anwendung z.B. in der optischen Nachrichtentechnik, zur Modulation und Steuerung von optischen Signalen, als räumliche Lichtmodulatoren in der optischen Signalverarbeitung, zur Frequenzverdopplung von Halbleiterlasern, für die optische Datenspeicherung, Sensortechnik und Xerographie.

Materialien mit elektrischen Suszeptibilitäten 3. Ordnung eignen sich zur Herstellung rein-optischer Schalter und damit zum Einsatz in rein-optischen Computern.

Um für die Anwendung im Bereich der nichtlinearen Optik 2. Ordnung geeignet zu sein, müssen derartige Materialien einer Reihe von Anforderungen genügen.

Voraussetzung für eine technische Anwendbarkeit ist ein möglichst hoher Wert für die dielektrische Suszeptibilität $\chi^{(2)}$. Dies bedingt beispielsweise eine nichtzentrosymmetrische Molekülanordnung im Kristall.

Eine Reihe anorganischer Substanzen wie z.B. Kaliumdihydrogenphosphat oder Lithiumniobat zeigt nichtlinear optische Eigenschaften. Alle diese Verbindungen sind jedoch mit den verschiedensten Nachteilen behaftet. Neben unzureichenden Werten für die dielektrische Suszeptibilität zweiter Ordnung mangelt es anorganischen Verbindungen häufig an einer genügenden Photostabilität bei der Behandlung mit hohen Lichtintensitäten, oder sie sind nur schwierig herzustellen und zu verarbeiten.

Aus Garito et al., Laser Focus 18 (1982) und der EP-0091 838 sind organische Verbindungen vom Nitroanilintyp bekannt. Ihre verhältnismäßig guten Werte für die photochemische Stabilität und die dielektrische Suszeptibilität zweiter Ordnung gehen jedoch einher mit einer schlechten Kristallisierbarkeit und einer mangelhaften mechanischen Stabilität. Insbesondere die Herstellung dünner Schichten, wie von der integrierten Optik gefordert, gelingt mit diesen Materialien nicht.

Polymere, die mit gelösten oder kovalent gebundenen NLO-Chromophoren versehen sind, erhalten in der Regel erst durch das Anlegen eines elektrischen Feldes im fluiden Zustand, wobei die NLO-Chromophore dipolar orientiert werden, eine nichtlineare Suszeptibilität 2. Ordnung ($\chi^{(2)}$). Die dipolare Orientierung wird durch Abkühlen unter die Glastemperatur dauerhaft eingefroren. $\chi^{(2)}$ ist infolgedessen in erster Näherung proportional zur Konzentration der NLO-Chromophore, zur E-Feld-Stärke, zur Hyperpolarisierbarkeit $\beta$ und zum Dipolmoment $\mu$. Daher sind Verbindungen mit großen Dipolmomenten und gleichzeitig hohen $\beta$-Werten von bedeutendem Interesse. So sind bereits Merocyanine (z.B. I.R. Girling et al. in Optics Comm. 55, 289 (1985)), Hemicyanine (z.B. D.J. Williams in Angew. Chem. 96, 637 (1984)), Hemicyanine mit Betainstruktur (G.H. Cross et al. in J. Opt. Soc. Am. B Vol. 4, No. 6, June 1987) oder Chinodimethansysteme (z.B US 4 659 177) als nichtlinear optische Materialien untersucht worden.

Die Materialien zeigen einerseits teilweise noch unbefriedigende nichtlinear optische Eigenschaften, andererseits werden sie den an eine wirtschaftliche Verwendung als nichtlinear optische Medien gestellten Anforderungen nur unzureichend gerecht.

So können beispielsweise die Hemicyanine aufgrund ihrer kationischen Struktur nicht im elektrischen Gleichfeld dipolar ausgerichtet werden, da das Anlegen des Feldes eine Wanderung zur Elektrodenoberfläche hin bewirkt.

Die Merocyanine besitzen zwar hohe $\beta$-Werte, werden aber aufgrund ihrer hohen Basizität bereits durch die Einwirkung von atmosphärischem Kohlendioxid und Wasser protoniert und gehen dabei strukturell in die weniger polarisierbare Phenol-Form über. In dieser Form haben aber die Merocyanine einen viel kleineren $\beta$-Wert als in der Phenolat-Form. Um den höheren $\beta$-Wert der Merocyanine in einer nicht-zentrosymmetrischen Umgebung anwendungstechnisch zu nutzen, muß jedoch die Protonierung stark zurückgedrängt werden. Dies gelingt sinnvoll nur, wenn man die Verbindungen kontinuierlich einer basischen Atmosphäre, beispielsweise

Ammoniakgas, aussetzt. Daher sind die Merocyanine als nichtlinear optische Materialien nicht oder nur von äußerst geringer wirtschaftlicher Bedeutung.

Es besteht somit ein Bedürfnis nach weiteren nichtlinear optischen Materialien, die die geschilderten Nachteile nicht oder nur in geringem Maße aufweisen und insbesondere ohne das Erfordernis des Vorliegens nichtzentrosymmetrischer Kristallverbände die Herstellung nichtlinear optischer Anordnungen erlaubt.

Diese Aufgabe wird durch die Bereitstellung der erfindungsgemäßen nichtlinear optischen Materialien mit zwitterionischer Struktur gelöst.

Es wurde überraschenderweise gefunden, daß sich Verbindungen mit einer zwitterionischen Struktur und einer Elektronendonor-/-akzeptoreinheit, sowie Polymere, die die nichtlinear optischen Chromophore physikalisch gelöst oder chemisch gebunden enthalten, in vorzüglicher Weise als nichtlinear optische Materialien eignen.

Gegenstand der Erfindung ist daher ein nichtlinear optisches Material, enthaltend ein nichtlinear optisches Chromophor mit einer zwitterionischen Struktur und mindestens einer Elektronendonor- und mindestens einer Elektronenakzeptoreinheit, die durch ein konjugiertes System miteinander verbunden sind, dadurch gekennzeichnet, daß die ladungstragenden Einheiten der zwitterionischen Struktur durch das konjugierte System oder einen Teil davon voneinander getrennt sind und eine oder keine dieser ladungstragenden Einheiten mit der Elektronendonor-oder -akzeptoreinheit identisch ist.

Gegenstand der Erfindung ist weiterhin ein Verfahren zur Herstellung von Polymermaterialien mit nichtlinear optischen Eigenschaften, indem man die erfindungsgemäßen Materialien durch Anlegen eines elektrischen Feldes dipolar ausrichtet.

Gegenstand der Erfindung ist schließlich die Verwendung dieser nichtlinear optischen Materialien in optischen Bauelementen, sowie optische Bauelemente, die diese Materialien enthalten.

Die erfindungsgemäßen nichtlinear optischen Materialien lassen sich durch die Formelschemata I und II beschreiben.

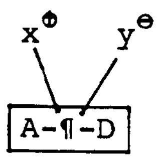
Ia

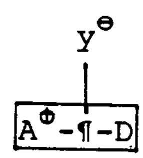
Ib

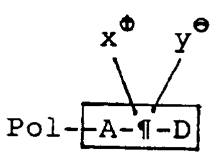
IIa

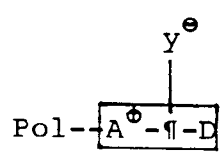
IIb

Das nichtlinear optische Chromophor besteht aus einem konjugierten ¶-System (¶), welches eine Elektronendonor-(A) und eine -akzeptorgruppe (D) miteinander verknüpft. Die ladungstragenden Einheiten der zwitterionischen Struktur, $x^{\oplus}$ und $y^{\ominus}$, beide kovalent gebunden, sind durch das gesamte ¶-System oder einen Teil davon voneinander getrennt.

Die ladungstragenden Einheiten ($x^{\oplus}$ und/oder $y^{\ominus}$) können dabei selbst direkt mit dem ¶-System verknüpft oder durch mindestens zwei aufeinanderfolgende Einfachbindungen vom ¶-System getrennt sein (Ia). Eine der beiden ladungstragenden Einheiten kann mit dem Donor oder Akzeptor identisch sein, vorzugsweise die kationische Einheit $x^{\oplus}$ mit dem Akzeptor A ($\rightarrow A^{\oplus}$, Ib). Eine der beiden ladungstragenden Einheiten kann auch mit D oder A verknüpft sein, vorzugsweise $y^{\ominus}$ mit D. Schließlich können die zwitterionischen Strukturen Ia oder Ib auch kovalent an eine Polymerkette (Pol), vorzugsweise als Seitenkette, gebunden sein (IIa, b).

Das ¶-System besteht vorzugsweise aus einer Kombination von zwei, drei, vier oder fünf der folgenden Reste: aromatisches System, Doppelbindung und Dreifachbindung. Besonders bevorzugte ¶-Systeme sind solche, bei denen ein Aromat mit einer Doppelbindung bzw. einer Dreifachbindung und bei denen nicht mehr als zwei Doppel- und/ oder Dreifachbindungen miteinander verknüpft sind. Bevorzugte aromatische Systeme sind Carbo- und Heterocyclen mit bis zu 18 Ringatomen, jedoch mit nicht mehr als drei Heteroatomen, vorzugsweise 1,4-Phenylen, 2,6- und 2,7-Naphthylen, Anthracen- und Phenanthrendiyl, Pyrroldiyl, Furandiyl, Thiophendiyl, Imidazoldiyl, Pyrazoldiyl, Oxazoldiyl, Thiazoldiyl, Pyridindiyl, Pyrimidindiyl, Triazindiyl, Chinolindiyl, Isochinolindiyl, Chinoxalindiyl, Indoldiyl, Benzimidazoldiyl, Benzthiazoldiyl.

Ein elektronenreicher Heteroaromat ist dabei vorzugsweise mit dem Donor D und ein elektronenarmer mit

dem Akzeptor A verknüpft. Besonders bevorzugt sind Verbindungen, in denen nicht mehr als zwei Heteroaromaten vorhanden sind.

Bevorzugte Elektronendonoren sind Amino-, Alkoxy-, Alkylthio-, ferner auch Alkyl-, Vinyl-, Hydroxy- und Thiologruppen.

Unter den Elektronenakzeptoren sind Nitro-, Cyano-, Alkoxycarbonyl-, ferner auch Acyl-, Haloalkyl- und Alkoxysulfonylgruppen bevorzugt.

Bevorzugte ladungstragende Einheiten der zwitterionischen Struktur sind stabile kationische und anionische Gruppen, vorzugsweise Komplexionen wie Ammonium-, Sulfonat- und Carboxylatgruppen.

Bevorzugte Verbindungen der Formel Ib, worin der Akzeptor mit der kationischen Gruppe identisch ist, sind N-alkylierte Stickstoffheterocyclen, insbesondere bevorzugt sind zwitterionische Hemicyanine.

Der Einfachheit halber bedeuten im folgenden Phe und Phe′ jeweils aromatische Kohlenwasserstoffe, vorzugsweise 1,4-Phenylen, Naphthalindiyl oder Anthracendiyl, die im Falle Phe einfach durch $x^{\oplus}$ oder $y^{\ominus}$, im Falle Phe′ einfach durch $y^{\ominus}$ substituiert sein können, Z und Z′ jeweils eine Doppel- oder Dreifachbindung, die im Falle Z einfach durch $x^{\oplus}$ oder $y^{\ominus}$, im Falle Z′ einfach durch $y^{\ominus}$ substituiert sein kann und Pyr einen 1-Alkylpyridinium-4-yl-rest, der einfach durch $y^{\ominus}$ substituiert sein kann.

Somit sind bevorzugte Verbindungen der Formel Ia Verbindungen der Teilformeln Ia1 bis Ia7

| | |
|---|---|
| A-Phe-Phe-D | Ia1 |
| A-Phe-Z-Phe-D | Ia2 |
| A-Phe-Phe-Z-Phe-D | Ia3 |
| A-Phe-Z-Z-Phe-D | Ia4 |
| A-Phe-Z-Phe-Phe-D | Ia5 |
| A-Phe-Z-Phe-Z-Phe-D | Ia6 |
| A-Phe-Phe-Z-Z-Phe-D | Ia7 |

Insbesondere bevorzugt sind Verbindungen der Teilformeln Ia1, Ia2, Ia3, Ia5 und Ia6. Ganz besonders bevorzugt sind diejenigen Verbindungen von Ia, in denen die mit A bzw. D verknüpften Ringe Phe durch die ladungstragenden Einheiten $x^{\oplus}$ bzw. $y^{\ominus}$ substituiert sind, oder worin ein Ring Phe gleichzeitig durch A und $x^{\oplus}$ substituiert ist und $y^{\ominus}$ mit D verknüpft ist.

Bevorzugte Verbindungen der Formel Ib sind solche der Teilformeln Ib1 bis Ib9

| | |
|---|---|
| Pyr-Phe′-D | Ib1 |
| Pyr-Phe′-Phe′-D | Ib2 |
| Pyr-Z′-Phe′-D | Ib3 |
| Pyr-Z′-Phe′-Phe′-D | Ib4 |
| Pyr-Phe′-Z′-Phe′-D | Ib5 |
| Pyr-Z′-Phe′-Z′-Phe′-D | Ib6 |
| Pyr-Phe′-Z′-Z′-Phe′-D | Ib7 |
| Pyr-Z′-Phe′-Phe′-Phe′-D | Ib8 |
| Pyr-Z′-Z′-Phe′-Phe′-D | Ib9 |

Insbesondere bevorzugt sind Verbindungen der Teilformeln Ib1, Ib2, Ib3, Ib4, Ib5, Ib6 und Ib8. Ganz besonders sind diejenigen Verbindungen von Ib bevorzugt, in denen $y^{\ominus}$ mit einem Ring Phe′ oder mit D verknüpft ist.

Die Chromophore entsprechend der Formel Ia und Ib zeigen hervorragende nichtlinear optische Eigenschaften. Es ist dabei unerheblich, ob sie als Verbindungen der Formel Ia bzw. Ib oder kovalent gebunden an eine Polymermatrix die erfindungsgemäße Verwendung finden. Von Bedeutung ist das Vorhandensein eines Donor-Akzeptor-Systems, verbunden mit einer zwitterionischen Struktur.

In diesem Zusammenhang ist auch die Struktur des Polymergerüsts unkritisch. So können Polystyrole, Polyester, Polysiloxane, Poly(meth)acrylate, Poly(meth)acrylamide sowie deren Copolymere und Polymergemische oder auch andere Polymermaterialien Verwendung finden.

Dementsprechend werden erfindungsgemäß insbesondere diejenigen Verbindungen der allgemeinen Formel Ia bzw. Ib oder diejenigen Polymere, die kovalent gebunden oder physikalisch gelöst ein Chromophor entsprechend der Formel Ia bzw. Ib enthalten, bevorzugt als nichtlinear optische Medien verwendet, in denen A, D, Phe, Phe′, Z, Z′, Pyr, $x^{\oplus}$ und $y^{\ominus}$ die genannten bevorzugten Bedeutungen besitzen.

Die Verbindungen der allgemeinen Formel Ia bzw. Ib können nach Standardverfahren der Organischen Chemie hergestellt werden.

Die Reaktionsbedingungen können den Standardwerken der Präparativen Organischen Chemie entnommen werden, z.B. HOUBEN-WEYL, Methoden der Organischen Chemie, Georg Thieme Verlag, Stuttgart, ORGANIC SYNTHESES, J. Wiley, New York - London - Sydney, oder HETEROCYCLIC COMPOUNDS, Bd. 14, J. Wiley, New York - London - Sydney.

Verbindungen der allgemeinen Formel I, in denen Z bzw. Z′ eine Doppelbindung bedeutet, können beispielsweise hergestellt werden, indem Alkylverbindungen mit einem entsprechenden Aldehyd oder Keton in an sich üblicher Weise kondensiert werden. Die Kondensation wird vorteilhafterweise unter Zusatz eines wasserentziehenden Mittels wie beispielsweise Acetanhydrid, einer Base wie Ammoniak, Ethylamin, Piperidin, Pyridin oder eines Salzes wie Ammoniumacetat oder Piperidiniumacetat durchgeführt. Als zweckmäßig erweist sich auch der Zusatz eines inerten Lösungsmittels wie z.B. Kohlenwasserstoffe wie Hexan, Cyclohexan, Benzol, Toluol oder Xylol. Die Reaktionstemperatur liegt gewöhnlich zwischen 0° und 250° C, vorzugsweise zwischen +20° und 150 °C. Bei diesen Temperaturen sind die Reaktionen in der Regel nach 15 Minuten bis 48 Stunden beendet.

Die als Ausgangsmaterial verwendeten Aromaten und Aldehyde bzw. Ketone sind bekannt oder können in Analogie zu den bekannten nach gebräuchlichen Methoden erhalten werden.

Zur Quaternisierung des Pyridinringes werden dem Fachmann bekannte Reagenzien unter an sich üblichen Reaktionsbedingungen mit den Pyridinverbindungen umgesetzt. Die Verfahrensbedingungen dazu sind allgemein bekannt und können ebenfalls den Standardwerken der Präparativen Organischen Chemie entnommen werden.

In einem weiteren Verfahren zur Herstellung der Verbindungen der Formel I setzt man ein Arylhalogenid mit einem Olefin um in Gegenwart eines tertiären Amins und eines Palladiumkatalysators (vgl. R.F. Heck, Acc. Chem. Res. 12 (1979) 146). Geeignete Arylhalogenide sind beispielsweise Chloride, Bromide und Iodide, insbesondere Bromide. Die für das Gelingen der Kupplungsreaktion erforderlichen tertiären Amine, wie z.B. Triethylamin, eignen sich auch als Lösungsmittel. Als Palladiumkatalysatoren sind beispielsweise dessen Salze, insbesondere Pd(II)-acetat, zusammen mit organischen Phosphor(III)-Verbindungen wie z.B. Triarylphosphanen geeignet. Man kann dabei in Gegenwart oder Abwesenheit eines inerten Lösungsmittels bei Temperaturen zwischen etwa 0° und 150 °C, vorzugsweise zwischen etwa 20° und 100 °C, arbeiten; als Lösungsmittel kommen z.B. Nitrile wie Acetonitril oder Kohlenwasserstoffe wie Benzol oder Toluol in Betracht. Die als Ausgangsstoffe eingesetzten Arylhalogenide und Olefine sind vielfach im Handel erhältlich oder können nach literaturbekannten Verfahren hergestellt werden, beispielsweise durch Halogenierung entsprechender Stammverbindungen bzw. durch Eliminierungsreaktionen an entsprechenden Alkoholen oder Halogeniden.

Weiterhin können zur Kopplung von Aromaten Arylhalogenide mit Arylzinnverbindungen umgesetzt werden. Bevorzugt werden diese Reaktionen unter Zusatz eines Katalysators wie z.B. eines Palladium(0)komplexes in inerten Lösungsmitteln wie Kohlenwasserstoffen bei hohen Temperaturen, z.B. in siedendem Xylol, unter Schutzgas durchgeführt.

Die erfindungsgemäßen Polymere enthalten mindestens ein Chromophor entsprechend der Formel Ia bzw. Ib, gegebenenfalls über einen Spacer, an die Polymerkette kovalent gebunden.

Die Verknüpfung zur Polymerhauptkette ist prinzipiell an jedem C-Atom einer Verbindung der Formel Ia bzw. Ib, gegebenenfalls über einen Spacer, möglich. Besonders bevorzugt bei den Verbindungen der Formel Ib ist die terminale Verknüpfung, d.h. an einem endständigen C-Atom im N-Alkylrest des Pyridinringes oder in D. Besonders bevorzugte Polymere sind Poly(meth)acrylate und Poly(meth)-acrylamide.

Als Spacer kommen vor allem Alkylengruppen mit 2 bis 20 C-Atomen in Betracht, die linear oder verzweigt und in denen eine oder mehrere $CH_2$-Gruppen durch -O-, -S- und/oder -$NR^1$- ersetzt sein können. $R^1$ bedeutet einen Alkylrest mit 1 bis 6 C-Atomen.

Beispielsweise kommen als Spacer in Betracht:

Ethylen, Propylen, Butylen, Pentylen, Hexylen, Octylen, Decylen, Undecylen, Dodecylen, Octadecylen, Ethylenoxyethylen, Ethylenthioethylen, Ethylen-N-methyliminoethylen oder 1-Methylalkylen.

Bevorzugte erfindungsgemäße Polymere werden durch Reaktion von entsprechend substituierten Alkoholen oder Aminen mit (Meth)acrylsäure oder ihren reaktionsfähigen Derivaten mit anschließender Polymerisation hergestellt, und zwar unter an sich üblichen und dem Fachmann bekannten Reaktionsbedingungen. Monomere können auch durch Umsetzung von Acrylaten oder Methacrylaten, die in der Alkoxygruppe durch Halogen, vorzugsweise Brom oder Jod, substituiert sind, mit den der Formel Ib zugrunde liegenden Pyridinderivaten (ohne N-Alkylsubstitution) hergestellt werden. Auf diese Weise erhält man nach der Polymerisation Polymere des Typs IIb, worin $A^{\oplus}$ Pyridin-1,4-diyl bedeutet. Die Monomere sind ebenfalls Gegenstand der Erfindung.

Als Comonomere zur Herstellung der Copolymere kommen vor allem in Betracht:

$C_1$- bis $C_{20}$-, vorzugsweise $C_1$- bis $C_8$-Alkylester der Acrylsäure und/oder der Methacrylsäure, Gemische dieser Ester sowie Gemische der genannten Ester mit Acrylnitril, Methacrylnitril, Styrol, 4-Methylstyrol, Acryl- und/oder Methacrylamid.

Von den Acrylsäureestern kommen beispielsweise in Betracht:

Methylacrylat, Ethylacrylat, Propylacrylat, n-Butylacrylat, Isobutylacrylat, Hexylacrylat, n-Octylacrylat, 2-Ethylhexylacrylat, Nonylacrylat, Decylacrylat, Dodecylacrylat, Hexadecylacrylat, Octadecylacrylat sowie die entsprechenden Methacrylate.

Bevorzugt sind die genannten Acrylate und Methacrylate von Alkanolen mit bis zu 8 C-Atomen.

Alternativ dazu können auch Polymere, die in der Seitenkette Halogensubstituenten, vorzugsweise Brom oder Iod, enthalten, mit den der Formel Ib zugrunde liegenden Pyridinderivaten (ohne N-Alkylsubstitution) umgesetzt werden. Auf diesem Weg erhält man die erfindungsgemäßen Homo- bzw. Copolymere, in denen das Chromophor mit dem Polymergerüst vorzugsweise terminal mit dem N-Alkylrest verknüpft ist. Die halogensubstituierten Ausgangspolymere sind dabei durch Homopolymerisation von halogenierten Monomeren oder durch deren Copolymerisation mit vorzugsweise den genannten Comonomeren erhältlich.

Die Herstellung der Polymere erfolgt nach bekannten Verfahren, vorzugsweise durch radikalische Polymerisation in Substanz oder in Lösung.

Zur Auslösung der Polymerisation geeignet ist eine Vielzahl bekannter Initiatoren, wie z.B. in Pappas (Hrsg.), UV Curing: Science and Technology, Technology Marketing Corp., Stamford, CT, 1978, oder in Ocian, Principles of Polymerization, McGraw-Hill, New York, beschrieben. Beispiele für thermisch zerfallende, radikalische Initiatoren sind Azoisobutyronitril (AIBN) oder Perverbindungen wie Kaliumpersulfat, Dibenzoylperoxid und Cyclohexanonperoxid, für durch Strahlungseinwirkung zerfallende Initiatoren Benzophenone, Alkylether des Benzoins, Benzilketale und $\alpha$-Hydroxyalkylphenone.

Die ethylenisch ungesättigten Monomere können erforderlichenfalls in Gegenwart von Zusatzstoffen umgesetzt werden.

Es können geringe Mengen von Lichtstabilisatoren, wie beispielsweise Benzophenon-Derivate, Benztriazol-Derivate, Tetraalkylpiperidine oder Phenylsalicylate, zugesetzt werden.

Je nach Einsatzzweck eignen sich organische Zusatzstoffe, wie Weichmacher, Netzmittel oder Silikone zur Verbesserung der Oberflächenbeschaffenheit.

Die Photopolymerisation erfolgt nach an sich bekannten Methoden durch Bestrahlen mit Licht oder UV-Strahlung des Wellenlängenbereichs von 250 bis 500 nm, vorzugsweise von 300 bis 400 nm. Als Strahlenquellen können Sonnenlicht oder künstliche Strahler verwendet werden. Vorteilhaft sind z.B. Quecksilberdampf-Hochdruck-, -Mitteldruck-oder -Niederdrucklampen, Xenon- und Wolframlampen; Laser-Lichtquellen können ebenfalls eingesetzt werden.

Weiterhin eignet sich energiereiche Strahlung wie beispielsweise Röntgen-, Elektronen-, Neutronen- und andere Kernstrahlung zur Polymerisationsauslösung, wobei die Menge an zugesetztem Photoinitiator üblicherweise verringert bzw. darauf gänzlich verzichtet werden kann.

Die thermische Polymerisation gelingt beispielsweise durch Behandeln mittels Ultraschall oder Mikrowellen oder durch Einwirkung von IR-Strahlung, beziehungsweise durch einfaches Erhitzen.

Durch Aufbringen der erfindungsgemäßen Verbindungen der Formel Ia bis Ib auf ein Substrat in gelöster oder flüssiger Form durch beispielsweise Bestreichen, Bedrucken, Tauchen oder Aufschleudern werden nichtlinear optische Anordnungen erhalten. Sie können weiterhin auch als Einkristalle in Pulverform, eingebaut in Clathraten oder gelöst in Polymeren ihre nichtlinear optischen Eigenschaften entfalten.

Die erfindungsgemäßen Polymermaterialien werden im elektrischen Gleichspannungsfeld dipolar ausgerichtet. Dies geschieht bei einer Temperatur, die in der Nähe der Glasübergangstemperatur des Polymermaterials liegt. Die Ausrichtung kann dabei sowohl oberhalb als auch unterhalb dieser Temperatur erfolgen. Anschließend wird im elektrischen Feld abgekühlt. Man erhält dann Polymermaterialien mit vorteilhaften nichtlinear optischen Eigenschaften.

Insbesondere eignen sie sich zur Verwendung in optischen Bauelementen. Sie können somit unter Ausnutzung des elektrooptischen Effekts oder zur Frequenzverdopplung und Frequenzmischung einerseits in bulk Materialien und andererseits in Wellenleiterstrukturen verwendet werden. Dabei können die erfindungsgemäßen Materialien gegebenenfalls selbst als Wellenleiter fungieren, z.B. die erfindungsgemäßen Polymere.

Die erfindungsgemäßen Materialien eignen sich damit beispielsweise in Komponenten auf dem Gebiet der integrierten Optik, der Sensor- und Nachrichtentechnik, zur Frequenzverdopplung von Laserlicht, zur Herstellung von Richtkopplern, Schaltelementen, Modulatoren, parametrischen Verstärkern, Wellenleiterstrukturen, Lichtventilen sowie anderen, dem Fachmann bekannten, optischen Bauelementen. Optische Bauelemente sind beispielsweise beschrieben in der EP 0218938.

Zur Erläuterung der Erfindung dienen die folgenden Beispiele.

Beispiel 1

N-Hexyl-4-(2-(4-(N-hexyl-N-(3-sulfonatopropyl)-amino)-phenyl)-ethenyl)-pyridinium-betain

a) 4-Brom-N-(3-sulfonatopropyl)-N-hexyl-anilinium-betain

Ein Gemisch von 19,2 g 4-Brom-N-hexylanilin (erhältlich durch Umsetzung von 4-Bromanilin mit 1-Bromhexan in 1,3-Dimethyl-2-imidazolidinon unter Zusatz von Natriumhydrogencarbonat) und 18,3 g Propansulton (kommerziell erhältlich) wird 2 Stunden auf 100 °C erhitzt. Das Reaktionsgemisch wird in Methanol aufgenommen und über eine Kieselgelsäule filtriert. Man erhält ein farbloses Glas.

b) Natrium-3-(N-hexyl-N-(4-(2-(4-pyridyl)-ethenyl)-phenyl)-amino)-propylsulfonat

Eine Lösung von 36,5 g 4-Brom-N-(3-sulfonatopropyl)-N-hexyl-anilinium-betain, 15,8 g 4-Vinylpyridin, 15,2 g Triethylamin, 337 mg Palladium (II) acetat und 913 mg Tris-o-tolylphosphan in 100 ml Acetonitril wird 28 Stunden zum Sieden erhitzt. Das Reaktionsgemisch wird auf 2 N Salzsäure gegossen und mit tert.-Butyl-methylether extrahiert. Die wäßrige Phase wird mit 32%iger Natronlauge alkalisch gemacht und der entstandene Niederschlag abfiltriert. Der Rückstand wird über eine Kieselgelsäule mit Methanol als Laufmittel chromatographiert. Das Produkt wird aus Methanol/Ether 8:2 umkristallisiert. Man erhält orangerote Kristalle.

c) N-Hexyl-4-(2-(4-(N-hexyl-N-(3-sulfonatopropyl)-amino)-phenyl)-ethenyl)-pyridinium-betain

Eine Lösung von 425 mg Natrium-3-(N-hexyl)-N-(4-(2-(4-pyridyl)-ethenyl)-phenyl)-amino)-propylsulfonat und 312 mg 1-Iodhexan in 6 ml N-Methylpyrrolidin-2-on wird 3 Stunden auf 80 °C erhitzt. Das Reaktionsgemisch wird in Ethylacetat eingerührt und der Niederschlag abfiltriert. Der Rückstand wird an einer Kieselgelsäule mit Dichlormethan/Methanol 8:2 chromatographiert. Man erhält ein rotes, an der Oberfläche grün schimmerndes, zähes Öl.

Beispiel 2

N-(4′-Dioctylamino-3′-carboxylato-4-nitrostilben-3-yl-methyl)-N,N,N-trimethylammonium-betain

a) 4,4′-Dinitro-3′-hydroxymethyl-stilben-3-carbon-säure

Zu einer Suspension von 71,6 g 4,4′-Dinitrostilben-3,3′-dicarbonsäure (BEILSTEINs Handbuch, 4. Aufl. 3. Erg.-Werk, Bd. IX/5, 4594) in 200 ml Tetrahydrofuran (THF) werden 600 ml einer 1molaren Lösung von Boran-THF-Addukt in THF zugetropft und 28 Stunden gerührt. Das Reaktionsgemisch wird mit 200 ml Methanol versetzt und eingedampft. Der Rückstand wird an einer Kieselgelsäule chromatographiert. Man erhält gelbe Kristalle.

b) 4-Amino-3′-hydroxymethyl-4′-nitrostilben-3-carbon-säure

Zu einer siedenden Lösung von 41,1 g 4,4′-Dinitro-3′-hydroxymethyl-stilben-3-carbonsäure in 1,5 1 Ethanol werden 84 ml einer mit Schwefelwasserstoff gesättigte 1,25 molaren wäßrigen Natriumsulfidlösung zugetropft. Nach Zugabe wird die Lösung noch 2 Stunden zum Sieden erhitzt. Das Reaktionsgemisch wird eingedampft und der Rückstand mit heißem Aceton extrahiert. Man erhält orangerote Kristalle.

c) 4-Amino-3′-brommethyl-4′-nitrostilben-3-carbon-säure

Ein Gemisch aus 31,4 g 4-Amino-3′-hydroxymethyl-4′-nitrostilben-3-carbonsäure und 220 ml 47%iger Bromwasserstoffsäure wird 20 Stunden bei 90 °C gerührt. Das Reaktionsgemisch wird mit 32%iger Natronlauge neutralisiert und das ausgefallene Produkt abfiltriert. Man erhält orangerote Kristalle.

d) N-(4′-Amino-3′-carboxylato-4-nitrostilben-3-yl-methyl)-N,N,N-trimethylammonium-betain

Ein Gemisch aus 20 g 4-Amino-3′-brommethyl-4′-nitro-stilben-3-carbonsäure und 100 g Trimethylamin wird im Autoklaven 24 Stunden auf 100 °C erhitzt. Das Reaktionsprodukt wird aus Wasser umkristallisiert. Man erhält orangerote Kristalle.

e) N-(4′-Dioctylamino-3′-carboxylato-4-nitrostilben-3-yl-methyl)-N,N,N-trimethylammonium-betain

Eine Lösung von 3,6 g N-(4′-Amino-3′-carboxylato-4-nitro-stilben-3-yl-methyl)-N,N,N-trimethylammonium-betain und 4,8 g 1-Bromoctan in 30 ml 1,3-Dimethyl-2-imidazolidinon wird mit 3,5 g Natriumhydrogencarbonat versetzt und 70 Stunden auf 100 °C erhitzt. Das Reaktionsgemisch wird auf Wasser gegossen und der Niederschlag abfiltriert. Man erhält rote Kristalle.

Beispiel 3

Copolymer aus Methylmethacrylat und N-(4-Methacryloyloxy)-butyl-4-(2-(4-(N-hexyl-N-(3-sulfonatopropyl)-amino)-phenyl)-ethenyl)-pyridinium-betain

Eine Lösung von 7,9 g Poly(methylmethacrylat-co(4-iod-butyl)-methacrylat) (erhältlich durch Copolymerisation von Methylmethacrylat und 4-Iodbutylmethacrylat im Verhältnis 9:1 in N-Methylpyrrolidin-2-on als Lösungsmittel und mit Azobisisobutyronitril als Initiator) und 3,0 g Natrium-3-(N-hexyl-N-(4-(2-(4-pyridyl)-ethenyl)-phenyl)-amino)-propylsulfonat in 45 ml N-Methylpyrrolidin-2-on wird 20 Stunden auf 80 °C erhitzt. Das Polymer wird aus Ethanol ausgefällt: tiefrotes Polymer.

Eine Lösung von 8,0 g dieses Polymers in 50 ml N-Methylpyrrolidin-2-on wird mit 3 g stark saurem und 3 g stark basischem Ionenaustauscher (Ionenaustauscher I bzw. Ionenaustauscher III der Fa. MERCK) versetzt und 18 Stunden bei Raumtemperatur gerührt. Der Ionenaustauscher wird abfiltriert und das Polymer aus Ethanol ausgefällt.

Beispiel 4

4-(2-(4-(N-Hexyl-N-(4-sulfonatobutyl)-amino)-phenyl)-ethenyl)-N-(4-methacryloyloxybutyl)-pyridinium-betain-Natriumiodid-Addukt

Eine Lösung von 10.0 g Natrium-4-(N-hexyl-N-(4-(2-(4-pyridyl)-ethenyl)-phenyl)-amino)-butylsulfonat (erhältlich analog Beispiel 1a und 1b), 6,1 g 4-Iodbutylmethacrylat und 2 mg 2,6-Di-tert.butyl-4-methyl-phenol in 100 ml N-Methylpyrrolidin-2-on wird 4 h auf 80 °C erhitzt. Das Produkt wird aus Essigester ausgefällt und an einer Kieselsäule mit Dichlormethan/Methanol 8:2 als Laufmittel chromatographiert. Man erhält rote, an der Oberfläche grünlich schimmernde Kristalle.

Beispiel 5

Copolymer aus Methylmethacrylat und 4-(2-(4-(N-Hexyl-N-(4-sulfonatobutyl)-amino)-phenyl)-ethenyl)-N-(4-methacryloyloxybutyl)-pyridinium-betain

Eine Lösung von 7.07 g 4-(2-(4-(N-Hexyl-N-(4-sulfonatobutyl)-amino)-phenyl)-ethenyl)-N-(4-methacryloyloxybutyl)-pyridinium-betain-Natriumiodid-Addukt, 9.01 g Methylmethacrylat und 3.28 mg Azobisisobutyronitril wird unter Stickstoff 18 h auf 60 °C erhitzt. Das Polymer wird aus Ethanol ausgefällt und erneut in 70 ml N-Methylpyrrolidin-2-on gelöst. Die Lösung wird mit 5 g stark saurem und 5 g stark basischem Ionenaustauscher (Ionenaustauscher I bzw. III der Fa. Merck) versetzt und 18 h bei Raumtemperatur gerührt. Der Ionenaustauscher wird abfiltriert und das Polymer aus Ethanol ausgefällt. Man erhält ein rotes Polymer.

Beispiel 6

Herstellung eines Films, enthaltend ein erfindungsgemäßes NLO-Chromophor als frequenzverdoppelndes Material und Bestimmung von $\chi^{(2)}$.

Es wird eine 23%ige (Gew.%) Lösung des Polymers aus Beispiel 5 in N-Methylpyrrolidin-2-on hergestellt. Die Lösung wird gefiltert (Filter mit Porendurchmesser 2 µm), um Staubpartikel zu entfernen.

Eine mit ITO (Indium-Zinn-Oxid) beschichtete Glasplatte (4 cm x 4 cm, Dicke: 1,1 mm) wird in neutraler Seifenlösung (Extran, Fa. Merck) im Ultraschall für 10 Minuten gereinigt, anschließend in zweifach destilliertem Wasser gespült und mit Isopropanol nachgespült. Die Polymerlösung wird auf diese Glasplatte aufgeschleudert, anschließend im Vakuum bei 85 °C für 2 Stunden getrocknet. Auf diesen Film wird eine semitransparente Goldelektrode aufgedampft.

Der Film wird im Vakuumofen auf 100 °C erhitzt; daraufhin wird eine Gleichspannung von 200 V für 10 Minuten angelegt. Im elektrischen Feld wird die Probe mit 1 °C/min. auf Raumtemperatur abgekühlt, anschließend das Feld abgeschaltet.

Zur Bestimmung der nichtlinearen Suszeptibilitäten des Materials wird der Film in den Strahlengang eines Nd:YAG Lasers ($\lambda$ = 1.06 µm, Pulsdauer 7 nsec, Pulsenergie 0,5 mJ) gestellt. Die Intensität des frequenzverdoppelten Lichts, die ein Maß für die Frequenzverdoppelungseffizienz der Probe ist, wird gemessen. Durch Intensitätsvergleich der Probe mit einem keilförmig gescnhittenen Quarzkristall ($\chi^{(2)}_{111}$ = 0,34 x $10^{-13}$ pm/V) wird der $\chi^{(2)}$-Koeffizient des Films, wie von K.D. Singer et al. im Appl. Phys. Lett. 49, 248-250 (1986) beschrieben, gemessen. Man erhält einen Wert von 46 pm/V. Dieser Wert nimmt innerhalb von 48 h auf 37 pm/V ab und bleibt dann über einen Zeitraum von mindestens drei Wochen konstant.

Beispiel 7

Es wird ein optisches Bauelement, wie von R. Lytel et al. auf der Konferenz: Advances in NLO Polymers and Inorg. Cryst., Liq. Cryst., and Laser Media, San Diego, 20.-21.8. 1987 (inzwischen publiziert: Proc. SPIE, Vol. 824, S. 152 (1988)) beschrieben, mit dem Polymer aus Beispiel 5 hergestellt. Das Material zeigt hervorragende Wellenleitungseigenschaften.

Beispiel 8

Es wird ein Polymerfilm mit dem Polymer aus Beispiel 3 aus einer 30%gen Lösung in N-Methyl-pyrrolidin-2-on analog Beispiel 7 hergestellt. Das Polymer wird oberhalb der Glastemperatur mit einer Spannung von 150 V dipolar orientiert. Das Polymer zeigt einen Wert $\chi^{(2)}$ von 3.1 x $10^{-9}$ esu, bestimmt durch Messung des elektrooptischen Koeffizienten, wie von G. Kanarian et al. auf der Konferenz: Advances in NLO Polymers and Inorg. Cryst., Liq. Cryst., and Laser Media, San Diego, 20.-21.8.1987 (inzwischen publiziert: Proc. SPIE, Vol. 824, S. 72-78 (1988)) beschrieben.

## Patentansprüche

1. Nichtlinear optisches Material, enthaltend ein nichtlinear optisches Chromophor mit einer zwitterionischen Struktur und mindestens einer Elektronendonor- und mindestens einer Elektronenakzeptoreinheit, die durch ein konjugiertes System miteinander verbunden sind, dadurch gekennzeichnet, daß die ladungstragenden Einheiten der zwitterionischen Struktur durch das konjugierte System oder einen Teil davon voneinander getrennt sind und eine oder keine dieser ladungstragenden Einheiten mit der Elektronendonor- oder -akzeptoreinheit identisch ist.

2. Nichtlinear optisches Material nach Anspruch 1, dadurch gekennzeichnet, daß die ladungstragenden Einheiten durch mindestens zwei aufeinanderfolgende Einfachbindungen voneinander getrennt sind.

3. Nichtlinear optisches Material, enthaltend mindestens eine polymere Komponente, dadurch gekennzeichnet, daß mindestens eine weitere Komponente ein nichtlinear optisches Chromophor nach Anspruch 1 oder 2 ist.

4. Nichtlinear optisches Material, enthaltend mindestens eine polymere Komponente, dadurch gekennzeichnet, daß das nichtlinear optische Chromophor nach Anspruch 1 oder 2, direkt oder über einen Spacer, kovalent an die Polymerkette gebunden ist.

5. Verfahren zur Herstellung von Polymermaterialien mit nichtlinear optischen Eigenschaften, dadurch gekenneichnet, daß man Materialien nach mindestens einem der Ansprüche 1 bis 4 durch Anlegen eines elektrischen Feldes dipolar ausrichtet.

6. Verwendung der nichtlinear optischen Materialien nach mindestens einem der Ansprüche 1 bis 4 in optischen Bauelementen.

7. Optisches Bauelement, enthaltend ein nichtlinear optisches Material nach mindestens einem der Ansprüche 1 bis 4.

## Claims

1. Nonlinear optical material containing a nonlinear optical chromophore having a zwitterionic structure and at least one electron-donor and at least one electronacceptor unit which are joined to each other by a conjugated system, characterized in that the charge-carrying unite of the zwitterionic structure are separated from each other by the conjugated system or a part thereof and one or none of these charge-carrying units is identical with the electron-donor or electron-acceptor unit.

2. Nonlinear optical material according to Claim 1, characterized in that the charge-carrying units are separated from each other by at least two successive single bonds.

3. Nonlinear optical material containing at least one polymeric component, characterized in that at least one further component is a nonlinear optical chromophore according to Claim 1 or 2.

4. Nonlinear optical material containing at least one polymeric component, characterized in that the nonlinear optical chromophore according to Claim 1 or 2 is bound covalently to the polymer chain directly or via a spacer.

5. Process for producing polymer materials having nonlinear optical characteristics, characterized in that the materials according to at least one of the Claims 1 to 4 are dipolarly aligned by applying an electric field.

6. Use of the nonlinear optical materials according to at least one of the Claims 1 to 4 in optical components.

7. Optical component containing a nonlinear optical material according to at least one of the Claims 1 to 4.

## Revendications

1. Matériau optique non linéaire contenant un chromophore optique non linéaire à structure zwitterionique avec au moins un motif donateur d'électrons et au moins un motif accepteur d'électrons reliés entre eux par un système conjugué, caractérisé en ce que les motifs de la structure zwitterionique portant des charges sont séparés l'un de l'autre par le système conjugué ou une partie de ce système et un de ces motifs portant des charges est identique au motif donateur d'électrons ou au motif accepteur d'électrons ou bien aucun de ces motifs portant des charges n'est identique au motif donateur d'électrons ou au motif accepteur d'électrons.

2. Matériau optique non linéaire selon revendication 1, caractérisé en ce que les motifs portant des charges sont séparés entre eux par au moins deux liaisons simples successives.

3. Matériau optique non linéaire contenant au moins un composant polymère, caractérisé en ce qu'au moins un autre composant consiste en un chromophore optique non linéaire selon revendication 1 ou 2.

4. Matériau optique non linéaire contenant au moins un composant polymère, caractérisé en ce que le chromophore optique non linéaire selon revendication 1 ou 2 est relié directement ou par l'intermédiaire d'un pont, par des liaisons covalentes, à la channe du polymère.

5. Procédé de préparation de matériaux polymères ayant des propriétés optiques non linéaires, caractérisé en ce que l'on soumet des matériaux selon au moins une des revendications 1 à 4 à orientation dipolaire par application d'un champ électrique.

6. Utilisation des matériaux optiques non linéaires selon au moins une des revendications 1 à 4 en tant qu'éléments de construction optiques.

7. Elément de construction optique contenant un matériau optique non linéaire selon au moins une des revendications 1 à 4.